# EUROPEAN PATENT APPLICATION

(11) **EP 1 954 036 A2**
(43) Date of publication of application: **06.08.2008**
(21) Application number: 07116969.2
(22) Date of filing: 21.09.2007
(51) Int. Cl.: H04N 5/445, G06F 3/048

(54) **Method for providing graphical user interface (GUI) for generating list and image apparatus thereof**

(30) Priority: 30.01.2007 KR 20070009686
(71) Applicant: SAMSUNG ELECTRONICS CO., LTD., Suwon-si, Gyeonggi-do 442-742 (KR)
(72) Inventor: Yun, Young-hwa, Seoul (KR); Jon, Seong-ick, Seoul (KR); Kim, Joon-hwan, Gyeonggi-do (KR); Lee, Jeong-yeon, Gyeonggi-do (KR); Hwang, Woo-seok, Gyeonggi-do (KR)
(74) Representative: Robinson, Ian Michael

(57) **Abstract**

A method for providing a Graphical User Interface (GUI) for generating a list, and an image apparatus (100) having the same are provided. The method for providing a GUI for generating a list provides the GUI for generating a list to generate a list including desired items by using a pointer which is moved in a space by two-dimensional movement of the remote control apparatus (200) by a user. Accordingly, even when using an image apparatus (100) such as a TV receiving a command of a user by the input of the keys on the remote control, a user can generate a file list more easily.

## Description

### BACKGROUND OF THE INVENTION

### 1. Field of the Invention

Methods and apparatuses consistent with the present invention relate to providing a Graphical User Interface (GUI) for generating a list, and more particularly, providing a GUI to generate a list having items which a user desires.

### 2. Description of the Related Art

In a case of an image apparatus such as a television (TV) which receives a command of a user by the input of keys on a remote control, it is cumbersome for a user to generate and reproduce a list comprising only the desired files.

It is relatively easier to generate and reproduce a file list by the drag-and-drop of a pointer using a mouse such as in a personal computer (PC), but the generatable file list is limited to the files of the same kind. That is, it is impossible to generate and reproduce different types of files in one list.

Accordingly, in an image apparatus such as a TV which receives a user's command by the input of keys on a remote control, a method for generating and reproducing a file list more easily is desired. Also, a method for generating and reproducing different types of files in one list is desired.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. In addition, the present invention is not required to overcome the disadvantages described above, and an exemplary embodiment of the present invention may not overcome any of the problems described above.

Additional aspects of the present invention will be set forth in part in the description which follows and, in part, will be obvious from the description, or may be learned by practice of the present invention.

An aspect of the present invention provides a method for providing a GUI for generating a list generate a list comprising desired items by using a pointer which is moved in a space by two-dimensional movement of a remote control apparatus by a user.

Another aspect of the present invention provides a method for providing a GUI for generating a list generate a list comprising different items drag-and-dropped by the pointer into a collection area displayed on a display, and an image apparatus incorporating the same.

A method for providing a GUI for generating a list may comprise generating a pointer which is moved in a space by two-dimensional movement of a remote control apparatus by a user and items, and combining the pointer and the items with an image to be displayed, and generating a list comprising the items drag-and-dropped by the pointer into a collection area displayed on a display.

The pointer may move to the same direction as the face of the remote control may be moved on a virtual plane which is parallel with a screen of a display.

The method may further comprise displaying the items drag-and-dropped into the collection area in the collection area.

The item may comprise a still image file and an audio file, and the drag-and-dropped still image file and the drag-and-dropped audio file are displayed in the collection area.

The method may further comprise reproducing the audio files comprised in the list one by one, while the still image files comprised in the list are reproduced one by one.

The method may further comprise reproducing the items comprised in the list one by one, wherein the item comprises a still image file and an audio file, and the list comprises only still image files or only audio files.

The item may be a broadcast channel, and a preference broadcast channel list may be displayed in the collection area.

An image apparatus may comprise a GUI generator which generates a GUI and combines the generated GUI with an image to be displayed; and a controller which controls the GUI generator to generate a pointer which is moved in a space by two-dimensional movement of a remote control apparatus by a user and items, and to combine the pointer and the items with an image to be displayed, and generates a list comprising items drag-and-dropped by the pointer into a collection area displayed on a display.

The pointer may move to the same direction as the face of the remote control is moved on a virtual plane which is parallel with a screen of a display.

The controller may control the GUI generator to display the items drag-and-dropped into the collection area in the collection area.

The item may comprise a still image file and an audio file, and the drag-and-dropped still image file and the drag-and-dropped audio file are displayed in the collection area.

The controller may control to reproduce the audio files comprised in the list one by one, while the still image files comprised in the list are reproduced one by one.

The item comprises a still image file and an audio file, the list comprises only still image files or only audio files, and the controller controls to reproduce the items comprised in the list one by one.

The item may be a broadcast channel, and a preference broadcast channel list may be displayed in the collection area.

The image apparatus may further comprise a display displaying the pointer, the items, and the collection area.

A method for providing a GUI for generating a list may comprise generating a pointer which is moved by manipulation of a user on a remote control apparatus, and combining the pointer with an image to be displayed; and generating a list comprising different items drag-and-dropped by the pointer into a collection area displayed on a display.

The item may comprise a still image file and an audio file, and the list comprises the still image files and the audio files drag-and-dropped into the collection area.

An image apparatus may comprise a GUI generator which generates a GUI and combines the generated GUI with an image to be displayed; and a controller which controls the GUI generator to generate a pointer which is moved by manipulation of a user on a remote control apparatus and to combine the pointer with the image to be displayed, and generates a list comprising different items drag-and-dropped by the pointer into a collection area displayed on a display.

The item may comprise a still image file and an audio file, and the list may comprise the still image files and the audio files drag-and-dropped into the collection area.

### BRIEF DESCRIPTION OF THE DRAWINGS

Above and other aspects of the present invention will become apparent and more readily appreciated from the following description of the exemplary embodiments, taken in conjunction with the accompany drawings of which:

FIGS. 1A to 1C are views illustrating a broadcast receiving system to which an exemplary embodiment of the present invention is applicable;

FIG. 2 is a block diagram of a TV and a remote control of FIG. 1;

FIG. 3 is a flowchart illustrating a method for providing a GUI for generating a list according to an exemplary embodiment of the present invention;

FIGS. 4A to 4F are views illustrating the method for providing a GUI for generating a list of FIG. 3;

FIG. 5 is a view illustrating a display representing GUI for generating a preference broadcast channel list;

FIG. 6 is a block diagram of an image apparatus according to another exemplary embodiment of the present invention;

FIG. 7 is a flowchart illustrating a method for providing a GUI for generating a list according to another exemplary embodiment of the present invention; and

FIG. 8 is a flowchart illustrating a method for providing a GUI for generating a list according to yet another exemplary embodiment of the present invention.

### DETAILED DESCRIPTION OF EXEMPLARY EMBODIMENTS OF THE INVENTION

Certain exemplary embodiments of the present invention will be described in greater detail with reference to the accompanying drawings.

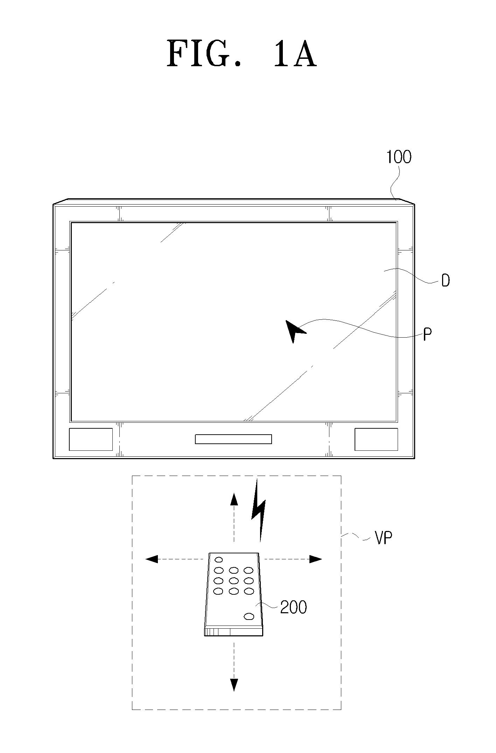

FIG. 1A is a view illustrating a broadcast receiving system according to an exemplary embodiment of the present invention. Referring to FIG. 1A, a broadcast receiving system comprises a digital TV (DTV) 100 as a broadcast receiving apparatus and a remote control (remote control apparatus) 200 as a user input apparatus.

The DTV 100 provides a user with a broadcast received over wire or wirelessly, through a display D. Additionally, the DTV 100 may provide a user with an external input received from an external apparatus which is connected over wire or wirelessly, through the display D, and may also provide a user with a broadcast by reproducing a file, such as a moving image file, a still image file, and a music file, stored in a built-in storage media.

The remote control 200 sends information on the manipulation of the user to the DTV 100, and the DTV 100 operates according to the received information. Although the remote control 200 of FIG. 1A comprises a plurality of keys, the remote control 200 may comprise either one or two keys as occasion demands. A plurality of keys are provided on the top side of the remote control 200, but the plurality of keys may be provided on the other sides such as the left or right side, or the bottom.

As indicated by a dotted arrow in FIG. 1A, the face of the remote control 200 may be moved in a space by the user in an upwards or downwards direction, or to the left or right, or in a direction combining two of these directions, such as an upper-leftwards direction. That is, the face of the remote control 200 may be moved in any direction.

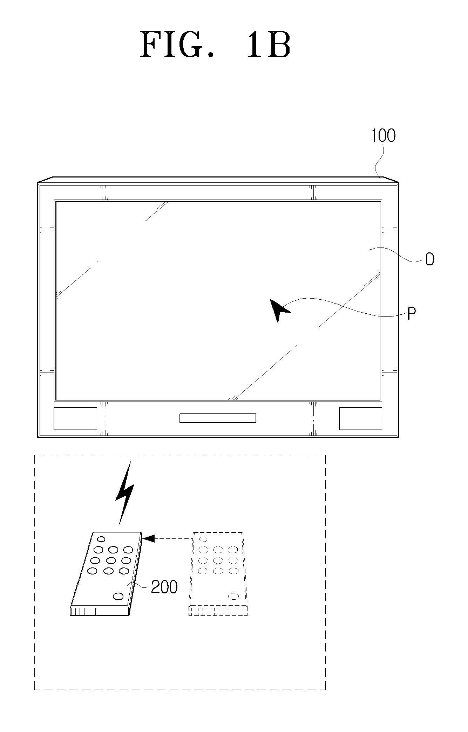

For example, the face of the remote control 200 may be moved while drawing a locus on a virtual plane (VP) which is in a parallel relation with a screen of the display D. FIG. 1B is a view illustrating a case in which the face of the remote control 200 is moved to the left direction while drawing a locus on a virtual plane which is in a parallel relation with the screen of the display D by the user.

The VP may not be in a perfect parallel relation with the screen of the display D, and may not be a perfect plane. That is, it is practically impossible for the movement of the face of the remote control 200 by the user to be on a perfect plane and in a perfect parallel relation with the screen of the display D.

Accordingly, an exemplary embodiment of the present invention is applicable to the case in which the face of the remote control 200 moves on an imperfect plane and in an imperfect parallel relation with the screen of the display D.

A user may move the face of the remote control 200 by turning only the user's wrist while the user's arm holding the remote control 200 is fixed.

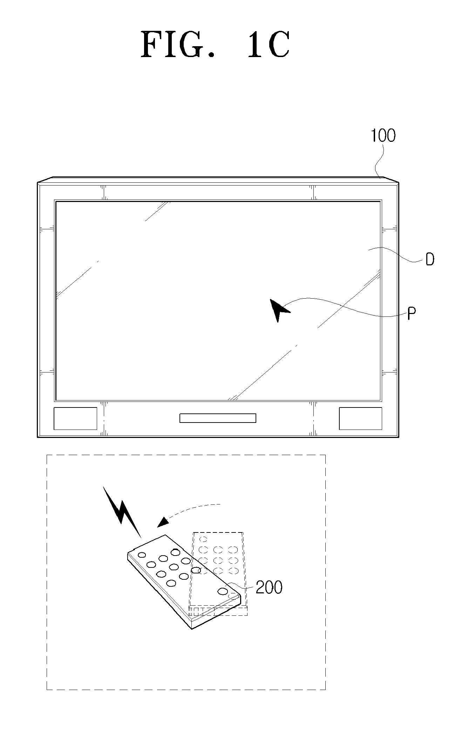

If only the user's wrist moves in an upwards or downwards direction, or to the left or right, or in a direction combining these, such as an upper leftward direction, the face of the remote control 200 may be moved upwards, downwards, or to the left or right, or in a direction combining these, such as an upper leftwards direction while drawing a curved locus on a virtual hemisphere surface. FIG. 1C is a view illustrating the case in which the face of the remote control 200 is moved to the left by a user while drawing a curved locus on a virtual hemisphere surface.

The virtual hemisphere surface, on which the face of the remote control 200 is moved by rotation of the user's wrist, may be a mathematically imperfect hemisphere surface. That is, it is practically impossible for the face of the remote control 200 to be moved by rotating the user's wrist while drawing a locus on a mathematically perfect hemisphere surface.

Accordingly, an exemplary embodiment of the present invention may be applicable to the case in which the face of the remote control 200 moves not on a mathematically perfect hemisphere, but on an imperfect hemisphere surface while drawing a curved locus.

That is, the pointer P displayed on the display D may be moved by the user spatially moving the remote control 200. The spatial movement of the face of the remote control 200 is distinguished from the movement of a mouse for a personal computer (PC) which is moved over a surface.

When the face of the remote control 200 is moved in a space, the pointer P displayed on the display D moves in the same direction as the face of the remote control 200. For example, i) if a user moves the face of the remote control 200 upwards within a space, the pointer P may move upwards, and ii) if the user moves the face of the remote control 200 to the upper-left in a space, the pointer P may move to the upper-left.

The pointer P selects an item displayed on the display D, or drags-and-drops the item to a different position from its current position.

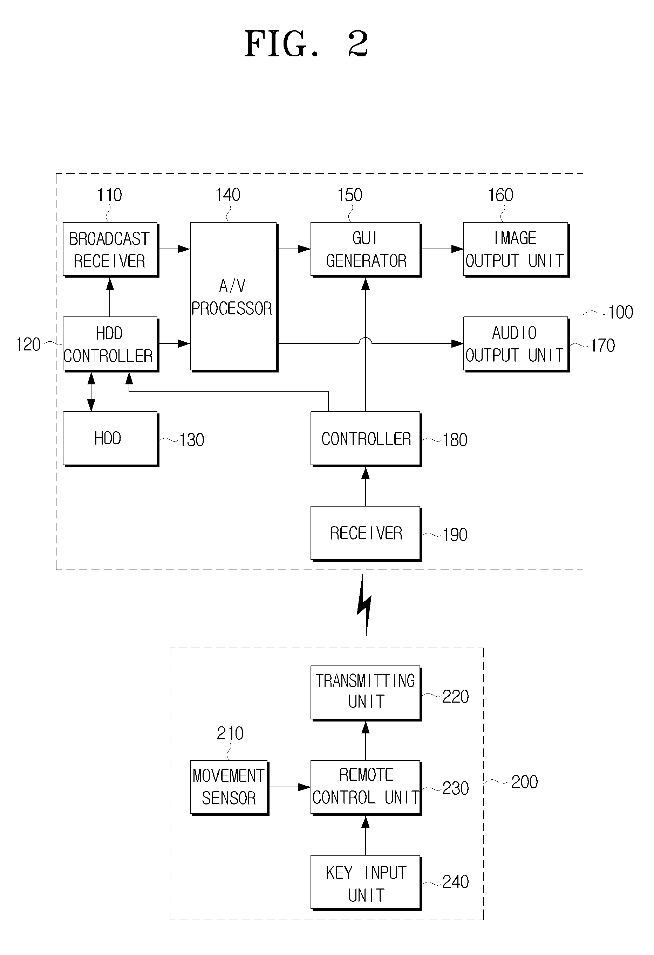

Hereinafter, the TV 100 and the remote control 200 illustrated in FIG. 1 will be explained in detail with reference to FIG. 2. FIG. 2 is a block diagram of the TV 100 and the remote control 200 of in FIG. 1.

Referring to FIG. 2, the remote control 200 comprises a movement sensor 210, a transmitting unit 220, a remote control unit 230, and a key input unit 240.

The movement sensor 210 senses the movement of the face of the remote control 200 by a user, and sends the result of sensing to the remote control unit 230 which will be explained in detail below. An exemplary implementation may use a biaxial gyro sensor as the movement sensor 210.

The key input unit 240 may comprise a power key, a channel key, a volume key, and a select key.

The remote control unit 230 transmits information on the movement such as moving direction, moving distance, which is obtained from the sensing result transmitted from the movement sensor 210, to the TV 100 via the transmitting unit 220. The remote control unit 230 also sends the TV 100 information about keys input by the user through the transmitting unit 220.

Referring to FIG. 2, the TV 100 comprises a broadcast receiving unit 110, a hard disc device (HDD) controller 120, a hard disc drive (HDD) 130, an A/V processor 140, a Graphic User Interface (GUI) generator 150, an image output unit 160, an audio output unit 170, a controller 180, and a receiver 190.

The broadcast receiving unit 110 receives a broadcast over wire or wirelessly from a broadcasting station or a satellite and decodes the received broadcast.

The HDD controller 120 may read a file stored at the HDD 130 and transmit the read file to the A/V processor 140 to be explained below. Also, the HDD controller 120 stores the broadcast being received through the broadcast receiving unit 110 at the HDD 130 as a form of the moving image file, or stores the file being input from the external apparatus through an external input terminal (not shown) at the HDD 130.

A type of the storable file at the HDD 130 is not limited such that not only a moving image file but also a still image file and an audio file may be stored at the HDD 130.

The A/V processor 140 executes signal processing such as video decoding, scaling, audio decoding of the broadcast output from the broadcast receiving unit 110 or the file output from the HDD controller 120. The A/V processor 140 transmits respectively the image signal to the GUI generator 150, and the audio signal to the audio output unit 170.

The GUI generator 150 generates a GUI to display on the display D, and combines the GUI with the image output from the A/V processor 140.

The image output unit 160 may display the image combining the GUI output from the GUI generator 150 on the display D, or output to an external display such as external TV connected through an external output terminal (not shown).

The audio output unit 170 outputs the audio output from the A/V processor 140 via a speaker, or outputs to the external device connected through the external output terminal.

The controller 180 controls the overall operation of the TV 100 according to the user's manipulation comprising movement of the face of the remote control 200, or a key input, which is transmitted from the remote control 200 via the receiver 190.

Particularly, the controller 180 controls the GUI generator 150 to provide a GUI for generating a list, and controls the HDD controller 120 to reproduce the items constituting the list which is written by a user through the GUI.

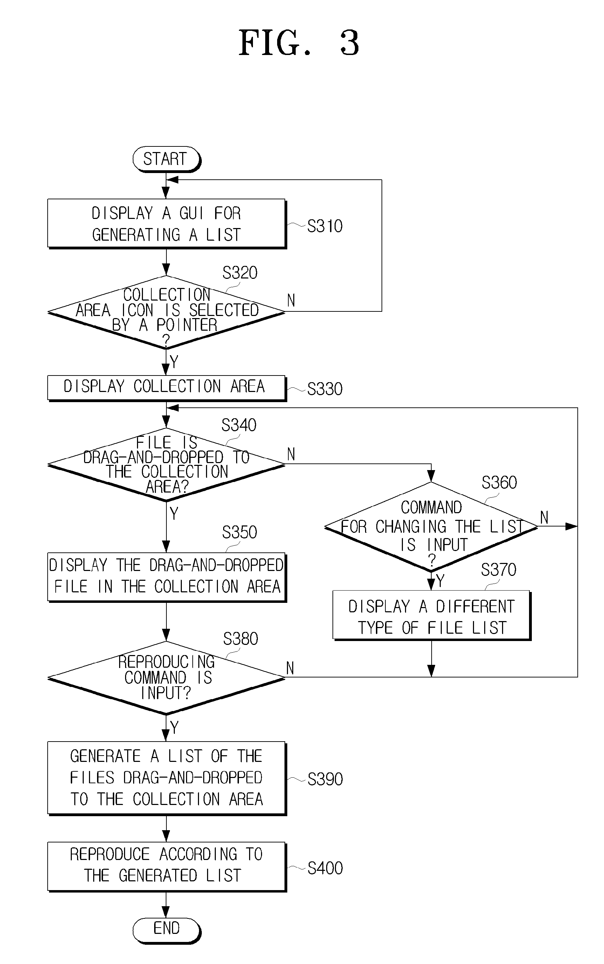

Hereinbelow, a process of providing a GUI for generating a list to write a 'music slide show' list, and a process of generating files constituting the music slide show list written through the GUI, will be explained in detail with reference to FIG. 3. FIG. 3 is a flowchart illustrating a method for providing a GUI for generating a list according to an exemplary embodiment of the present invention.

Referring to FIG. 3, the controller 180 controls the GUI generator 150 to display the GUI for generating the music slide show list on a display D (S310).

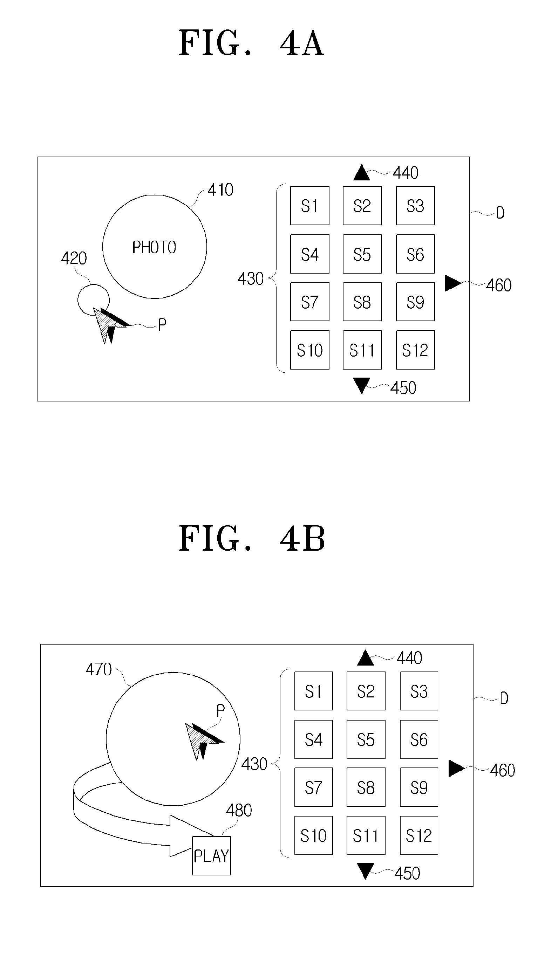

FIG. 4A illustrates a display D displaying a GUI by operation S310, in which a current operating mode of the TV 100 is a photo generating mode. Referring to FIG. 4A, a pointer P, mode information 410, a collection area icon 420, a still image file list 430, an icon ▲ 440, an icon ▼ 450, and an icon ► 460 are displayed on the display D.

The mode information 410 displays a current operating mode of the TV 100, and the collection area icon 420 enables calling for a collection area on the display D.

The still image file list 430 is a list of the still image files S1-S12 among the files stored at the HDD 130. The icon ▲ 440 and the icon ▼ 450 enable scrolling on the still image file list 430.

The icon ► 460 is used to input a command for changing the list displayed on the display D. For example, if a user wants to change the still image file list 430 displayed on the display D into a different type of a file list such as an audio file list, the icon ► 460 is used.

If the collection area icon 420 is selected (S320-Y) by the pointer P, the controller 180 controls the GUI generator 150 to display the collection area on the display D(S330).

The selection at operation S320 is executed by moving the face of the remote control 200 on VP to move the pointer P to point the collection area icon 420, and then by pressing the select key on the key input unit 240 of the remote control 200.

FIG. 4B is a view illustrating a display D displaying the collection area 470 generated by operation S330. A play icon 480 is displayed at a bottom of the collection area 470. The play icon 480 is used to input a command for reproducing files displayed in the collection area 470.

If one of still image files S1-S12 listed in the still image file list 430 is drag-and-dropped to the collection area 470 by the pointer P (S340-Y), the controller 180 controls the GUI generator 150 to display the drag-and-dropped still image file in the collection area 470 (S350).

The drag-and-drop at operation S340 is executed by: i) moving the face of the remote control 200 on VP to move the pointer P to point a specific still image file, ii) moving the still image file along with the pointer P to the collection area 470, by moving the face of the remote control 200 while keeping depressed the select key on the key input unit 240 of the remote control 200, and then iii) releasing the depressed select key.

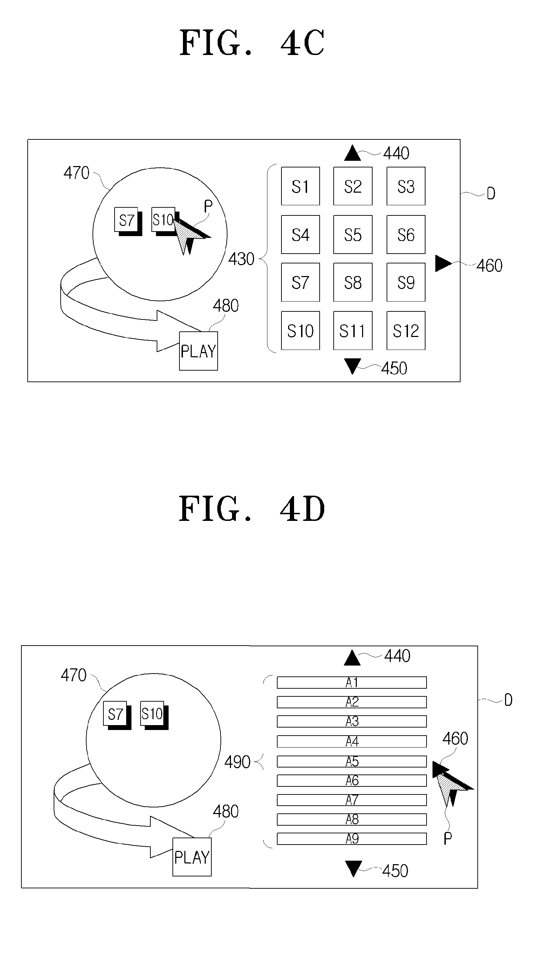

FIG. 4C is a view illustrating a display D displaying a result of process S350, after two still image files 'S7' and 'S10' are drag-and-dropped into the collection area 470 by the pointer P at operation S340.

If a command for changing the file list is input after operation S330 (S340-N and S360-Y), the controller 180 controls the GUI generator 150 to display a different type of file list from the file list displayed on the display D (S370).

The command for changing the file list at operation S360 is executed by moving the face of the remote control 200 on VP to move the pointer P to point the icon ► 460, and then by pressing the select key on the key input unit 240 of the remote control 200.

FIG. 4D is a view illustrating a display D displaying the audio file list 490 by operation S370.

If one of audio files A1-A9 listed in the audio file list 490 is drag-and-dropped to the collection area 470 by the pointer P (S340-Y), the controller 180 controls the GUI generator 150 to display the drag-and-dropped audio file in the collection area 470 (S350).

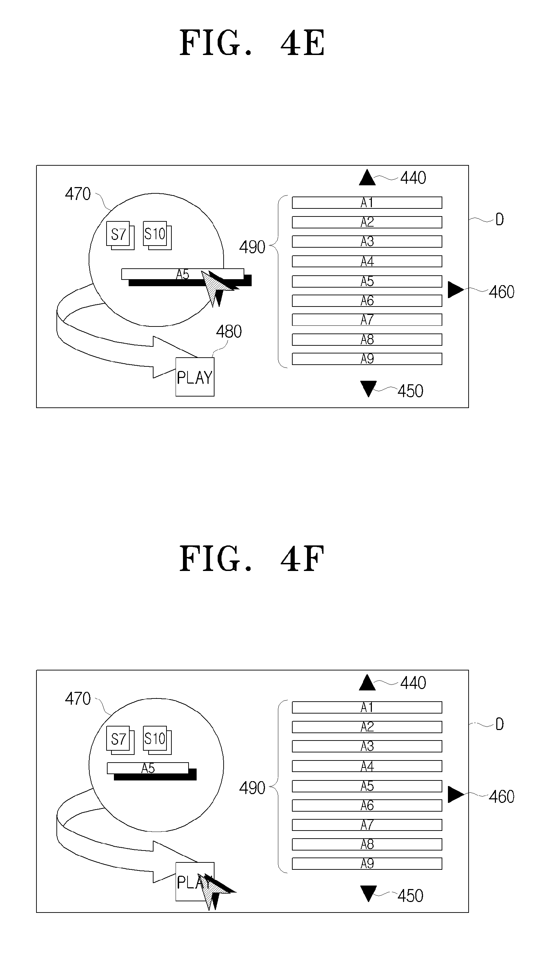

FIG. 4E is a view illustrating a display D in which the audio file 'A5' is being dragged into the collection area 470, and FIG. 4F is a view illustrating a display D in which the audio file 'A5' is dragged by the pointer P. As illustrated in FIG. 4F, the audio file 'A5' in addition to the still image files 'S7' and `S 10' is displayed in the collection area 470.

If a reproducing command is input (S380-Y), the controller 180 generates a list of the files drag-and-dropped to the collection area 470 (S390).

The reproducing command at operation S380 is executed by moving the face of the remote control 200 on VP to move the pointer P to point the play icon 480, and then by pressing the select key on the key input unit 240 of the remote control 200.

The controller 180 controls the HDD controller 120 and the A/V processor 140 to reproduce the list generated at operation S390 (S400). That is, the controller 180 controls the HDD controller 120 and the A/V processor 140 such that while the still image files comprised in the list generated at operation S390 are reproduced one by one, the audio files comprised in the list are reproduced one by one (S400).

The still image files are output sequentially from the image output unit 160, and the audio files are output sequentially from the audio output unit 170.

The process of providing the GUI for generating a list to write a music slide show list as an item list, and the process of reproducing the files constituting the music slide show list written through the GUI, were explained above.

An exemplary embodiment of the present invention describes a music slide show list comprising still image files and audio files as a list. However, one will understand that the music slide show list is an example of an item list and that an item list such as a still image file list, an audio file list, a moving image file list, or a preference broadcast channel list is also applicable.

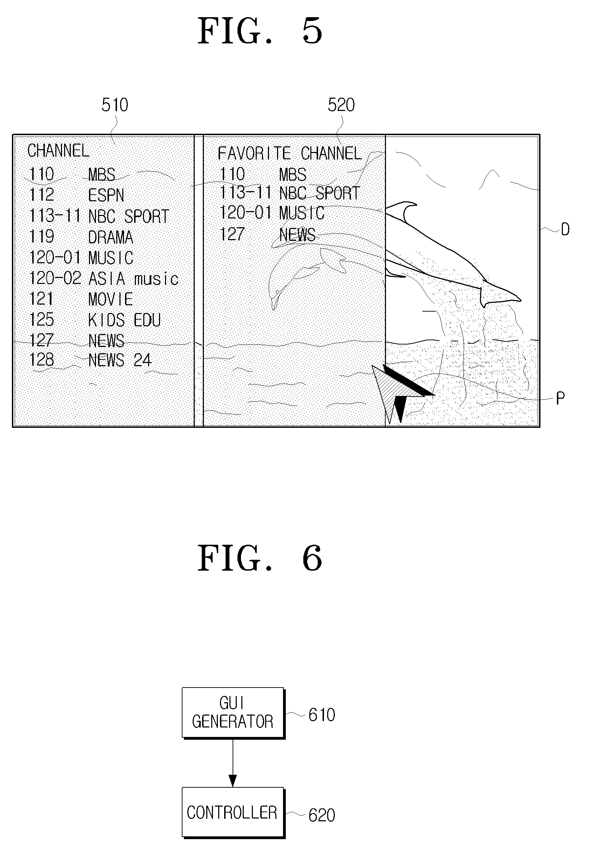

FIG. 5 illustrates an example of a display D displaying GUI for generating a preference broadcast channel list. Referring to FIG. 5, a broadcast channel list 510 is displayed at the left side of the display D, and a preference broadcast channel list 520 is displayed at the center of the display D. If one of the broadcast channels listed in the broadcast channel list 510 is drag-and-dropped into the preference broadcast channel list 520 by the pointer P, the drag-and-dropped broadcast channel is displayed in the preference broadcast channel list 520, and is established as the preference broadcast channel.

The collection area is provided as a round shape in the exemplary embodiment of the present invention, but other forms of the collection area are also applicable.

According to an exemplary embodiment of the present invention, the HDD is used as an example of a storage medium which is built-in a TV, but other types of storage media are also applicable.

Although the exemplary embodiments have described the TV as an example of the broadcast receiving apparatus, the broadcast receiving apparatuses may be implemented as a set-top box (STB), a digital multimedia broadcast (DMB) receiving apparatus, and a portable apparatus with a built-in module for receiving broadcast such as a mobile phone with a built in module for receiving DMB. In the case of the portable apparatus, a pointer P may be moved by using a touch pad instead of a remote control.

Any image apparatus capable of reproducing a moving image stored in a storage media is applicable to the present invention, in addition to the broadcast receiving apparatus of an exemplary embodiment of the present invention. A touch pad or a mouse to move the pointer P may be used instead of the remote control, according to a kind of the image apparatus in use.

Another exemplary embodiment of the present invention is described in detail with reference to FIGS. 6 to 8.

Referring to FIG. 6, an image apparatus according to another exemplary embodiment of the present invention, comprises a GUI generator 610, and a controller 620. The GUI generator 610 generates a GUI and combines the generated GUI with an image to be displayed, by control of the controller 620.

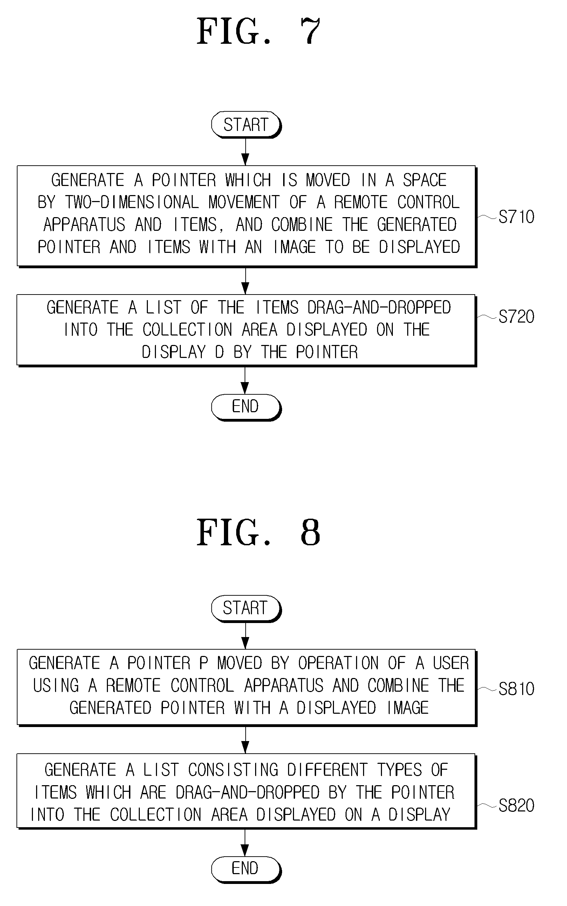

According to the method for providing the GUI for generating a list illustrated in FIG. 7, the controller 620 controls the GUI generator 610 to generate a pointer which is moved in a space by two-dimensional movement of the remote control apparatus and items, and to combine the generated pointer and items with the image to be displayed (S710).

The controller 620 generates a list of the items drag-and-dropped by the pointer P into the collection area 470 displayed on the display D (S720).

According to the method for providing a GUI for generating a list illustrated in FIG. 8, the controller 620 controls the GUI generator 610 to generate a pointer P to be moved by operation of a user using a remote control apparatus, and to combine the generated pointer P with the displayed image (S810).

The controller 620 generates a list comprising different types of items which are drag-and-dropped by the pointer P into the collection area displayed on the display (S820).

As a result, the GUI for generating a list to write an item list can be provided, and files constituting the list written through the GUI can be reproduced.

As described above, according to the exemplary embodiment of the present invention, a user using the pointer P which is moved in a space by two-dimensional movement of a remote control apparatus may generate a list comprising desired items. Accordingly, even when using an image apparatus such as a TV receiving a command of a user by the input of the keys on the remote control, a user can generate a file list more easily.

Also, a list can be generated, comprising different types of items which are drag-and-dropped by the pointer P into the collection area displayed on the display D. Accordingly, it is possible that different types of files are generated into one list, and are reproduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a Graphical User Interface (GUI) for generating a list, the method comprising:
generating a pointer, which is moved in a space by two-dimensional movement of a remote control apparatus (200), and items,
combining the pointer and the items with an image to be displayed; and
if at least some of the items are drag-and-dropped by the pointer into a collection area, generating a list comprising the items drag-and-dropped by the pointer into the collection area which is displayed.

2. The method of claim 1, wherein the pointer moves in a same direction as a face of the remote control is moved on a virtual plane which is parallel with a screen of a display.

3. The method of claim 1 or 2, further comprising:
displaying the items drag-and-dropped into the collection area in the collection area.

4. The method of claim 3, wherein each of the drag-and-dropped items comprises at least one still image file and at least one audio file which are displayed in the collection area.

5. The method of claim 4, further comprising:
while the at least one still image file comprised in the list is reproduced one by one, reproducing the at least one audio file comprised in the list one by one.

6. The method of claim 1, further comprising:
reproducing the items comprised in the list one by one,
wherein each of the listed items comprises a still image file and an audio file, and the list comprises still image files or only audio files.

7. The method of claim 1, wherein each of the listed items is a broadcast channel and a preference broadcast channel list is displayed in the collection area.

8. An image apparatus (100) comprising:
a Graphical User Interface (GUI) generator (150) which generates a GUI and combines the generated GUI with an image to be displayed; and
a controller (180) which controls the GUI generator (150) to generate a pointer, which is moved in a space by two-dimensional movement of a remote control apparatus (200), and items, and to combine the pointer and the items with the image to be displayed, and if at least some of the items are drag-and-dropped by the pointer into a collection area, generates a list comprising the items drag-and-dropped into the collection area which is displayed.

9. The image apparatus (100) of claim 8, wherein the pointer moves in a same direction as a face of the remote control is moved on a virtual plane which is parallel with a screen of a display.

10. The image apparatus (100) of claim 8, wherein the controller (180) controls the GUI generator (150) to display the items drag-and-dropped into the collection area in the collection area.

11. The image apparatus (100) of claim 10, wherein each of the listed items comprises at least one still image file and at least one audio file which are displayed in the collection area.

12. The image apparatus (100) of claim 11, wherein the at least one still image file is reproduced, and the controller (180) controls to reproduce the at least one audio file.

13. The image apparatus (100) of claim 8, wherein each of the listed items comprises at least one still image file and at least one audio file, the list comprises the at least one still image file or the at least one audio file, and the controller (180) controls to reproduce the items comprised in the list.

14. The image apparatus (100) of claim 8, wherein each of the listed items is a broadcast channel, and a preference broadcast channel list is displayed in the collection area.

15. The image apparatus (100) of claim 8 further comprising:
a display displaying the pointer, the items, and the collection area.

16. A method for providing a Graphical User Interface (GUI) for generating a list comprising:
generating a pointer which is moved by manipulation on a remote control apparatus (200),
combining the pointer with an image to be displayed; and
generating a list comprising different items drag-and-dropped by the pointer into a collection area which is displayed.

17. The method of claim 16, wherein each of the listed items comprises at least one still image file and at least one audio file, and if the at least one still image file and the at least one audio file are drag-and-dropped into the collection area, the list comprises the at least one still image file and the at least one audio file drag-and-dropped into the collection area.

18. An image apparatus (100) comprising:
a Graphical User Interface (GUI) generator which generates a GUI and combines the generated GUI with an image to be displayed; and
a controller (180) which controls the GUI generator (150) to generate a pointer which is moved by manipulation on a remote control apparatus (200) and to combine the pointer with the image to be displayed, and generates a list comprising different items drag-and-dropped by the pointer into a collection area which is displayed.

19. The image apparatus (100) of claim 18, wherein each of the listed items comprises at least one still image file and at least one audio file, and if the at least one still image file and the at least one audio file are drag-and-dropped into the collection area, the list comprises the at least one still image file and the at least one audio file drag-and-dropped into the collection area.
